# EUROPÄISCHE PATENTANMELDUNG

(11) **EP 4 764 072 A1**
(43) Veröffentlichungstag der Anmeldung: **24.06.2026**
(21) Anmeldenummer: 25223419.0
(22) Anmeldetag: 15.12.2025
(51) Int. Cl.: E01C 11/22, A01G 24/13, B01D 39/06

(54) **BEGRÜNBARER FLÄCHENBELAG UND ZUGEHÖRIGES PFLANZSUBSTRAT**

(30) Priorität: 19.12.2024 DE 102024138944
(71) Anmelder: Godelmann GmbH & Co. KG, 92269 Fensterbach (DE)
(72) Erfinder: Godelmann, Bernhard, 92245 Kümmersbruck (DE)
(74) Vertreter: Glück Kritzenberger Patentanwälte PartGmbB

(57) **Zusammenfassung**

Die Erfindung betrifft einen begrünbaren Flächenbelag (1) mit einer begeh- und/oder befahrbaren Oberfläche (1a) und ein zugehöriges Pflanzsubstrat (5), wobei der begrünbare Flächenbelag (1) eine Vielzahl von im Verbund auf einer Bettungsschicht (2) verlegten Rasenpflastersteinen (3) aus Beton umfasst, die mehrere zur Aufnahme eines Pflanzsubstrates (5) ausgebildete Pflanzfreiräume (4) aufweisen, wobei die Pflanzfreiräume (4) mit dem Pflanzsubstrat (5) befüllt sind. Besonders vorteilhaft besteht das Pflanzsubstrat (5) aus einem Gemisch aus natürlichem Erdreich, insbesondere Humus und zumindest einem natürlichen und/oder künstlichen Molekularsieb.

## Beschreibung

Die Erfindung bezieht sich auf einen begrünbaren Flächenbelag gemäß dem Oberbegriff der Patentanspruches 1 und ein zugehöriges Pflanzsubstrat gemäß dem Oberbegriff des Patentanspruches 12.

Flächenbeläge, insbesondere begrünbare Flächenbeläge zur Schaffung von begehbaren und/oder befahrbaren Verkehrsflächen wie beispielsweise Wege, Plätze oder Parkplätze sind hinlänglich bekannt. Diese werden häufig aus Formsteinen aus Beton hergestellt, und zwar durch Pflastern. Hierzu werden die Formsteine bzw. Pflastersteine aus Beton auf einer in den Untergrund eingebrachten Bettungsschicht im Verbund verlegt. Zwischen den benachbarten Pflastersteinen entstehen dabei Fugen, welche üblicherweise mit sand- oder splittartigen Fugenmaterialien verfüllt werden. Zur Ausbildung gleichmäßig breiter Fugen weisen eine Vielzahl von Formsteinen bzw. Pflastersteinen aus Beton so genannte Abstandhalter auf, die üblicherweise im unteren, nach dem Verlegen im Verbund nicht mehr sichtbaren Bereich einzelner Seitenflächen der Formsteine angeformt sind. Derartige Flächenbeläge sind aus dem Stand der Technik hinreichend bekannt.

Weiterhin sind aus dem Stand der Technik aus Rasenpflastersteinen aus Beton hergestellte, begrünbare Flächenbelage in verschiedenen Ausführungsvarianten bekannt. Zur Realisierung derartiger begrünbarer Flächenbeläge finden beispielsweise Rasenpflastersteine in Form von Rasengittersteinen, Rasenkammersteinen, Rasenplatten oder Rasenstegplatten Verwendung. Derartige Rasenpflastersteine weisen mehrere zur Aufnahme eines Pflanzsubstrates ausgebildete Pflanzfreiräume, beispielsweise in Form von Pflanzöffnungen oder Pflanzkammern auf, die zur Begrünung des daraus hergestellten Flächenbelages mit einem Pflanzsubstrat zur Anpflanzung von beispielsweise Rasen befüllt werden können. Diese Pflanzfreiräume sind häufig als Durchbrüche in den Rasenpflastersteinen realisiert, über die zusätzlich auch Versickerungswege bereitgestellt werden, über die Niederschlagswasser von der Oberfläche des Flächenbelages in das unter dem Flächenbelag befindliche Erdreich geleitet werden kann. Begrünte Flächenbeläge sind damit auch wasserdurchlässig, wodurch eine vollständige oder weitgehend vollständige Versiegelung der Befestigungsfläche vermieden werden kann.

In der jüngsten Vergangenheit kommt der Reinigung des Niederschlagswassers vor der Zuführung an das Grundwasser eine immer größere Bedeutung zu. Zur Vermeidung einer Verunreinigung des Grundwassers sind wasserdurchlässige Flächenbeläge wünschenswert, die eine Reinigung des Niederschlagswassers von Schadstoffen wie Mineralölen oder Schwermetallen ermöglichen. Neben der Bereitstellung einer ausreichenden Wasserversorgung des Pflanzenbewuchs eines begrünten Flächenbelages ist es daher wünschenswert, ein Eindringen von im Niederschlagswasser enthaltenen Schadstoffen in das Grundwasser effektiv zu reduzieren.

Ferner sind natürliche und künstliche Molekularsiebe in der Form von natürlichen und künstlichen bzw. synthetischen Zeolithen bekannt geworden, welche ein hohes Absorptionsvermögen insbesondere für gelöste Stoffe einer bestimmten Molekülgröße aufweisen. Derartige Molekularsiebe können daher auch zur Absorption von Schadstoffen aus Niederschlagswasser dienen.

Auch sind geschlossene, d.h. nicht begrünbare Flächenbeläge bekannt, die aus im Verbund verlegten Pflastersteinen aus Beton hergestellt sind und bei den zur Verfüllung der Fugen des nicht begrünbaren Flächenbelages ein Fugenmaterial mit speziellen Filtereigenschaften Verwendung findet. Das Fugenmaterial besteht dazu aus einem Gemisch aus einem sandartigen Anteil, einem Feinanteil und einem künstlichen Molekularsieb, wobei der Volumenanteil des künstlichen Molekularsiebes.

### Darstellung der Erfindung

Aufgabe der vorliegenden Erfindung ist es daher einen begrünbaren Flächenbelag zur Verfügung zu stellen, der die aus dem Stand der Technik bekannten Nachteile beseitigt und insbesondere ein Eindringen von im Niederschlagswasser enthaltenen Schadstoffen über die Pflanzfreiräume in das Grundwasser deutlich reduziert. Diese Aufgabe wird erfindungsgemäß durch einen begrünbaren Flächenbelag gemäß Anspruch 1 und ein zugehöriges Pflanzsubstrat gemäß Anspruch 12 gelöst. Weitere vorteilhafte Aspekte, Details und Ausgestaltungen der Erfindung ergeben sich aus den abhängigen Ansprüchen, der Beschreibung sowie den Zeichnungen.

Der wesentliche Aspekt des erfindungsgemäßen begrünbaren Flächenbelages ist darin zu sehen, dass die Pflanzfreiräume mit einem Pflanzsubstrat verfüllt werden, das aus einem Gemisch aus natürlichem Erdreich, insbesondere Humus und zumindest einem natürlichen und/oder künstlichen Molekularsieb besteht. Besonders vorteilhaft werden durch das im Pflanzsubstrat enthaltene natürliche und/oder künstliche Molekularsieb im Niederschlagswasser enthaltene Schadstoffe, insbesondere Schwermetalle gebunden und somit vor dem Versickern in das Erdreich aus dem Niederschlagswasser entfernt, wodurch ein Eindringen in das Grundwasser verhindert werden kann. Weiterhin vorteilhaft kann sowohl natürliches als auch künstliches Molekularsieb für sich genommen oder eine geeignete Mischung daraus Verwendung finden.

Unter einem natürlichen Erdreich im erfindungsgemäßen Sinne werden alle in der Natur vorkommenden feinkörnigen Gemische verstanden, die einen fruchtbaren Erdboden für das Pflanzenwachstum bilden können. Dazu zählen insbesondere auch kompostierte Materialien, unter Einschluss von Zuschlägen wie beispielsweise Ziegelbruch, feuchtigkeitsspeicherndem Steinbruch oder auch Basalt. Die Zuschläge weisen dabei beispielsweise eine Körnung zwischen 2mm und 16mm auf. Natürliche Erden bzw. natürliches Erdreich kann beispielsweise verwittertes Gestein, organische Stoffe und/oder Mineralien und insbesondere auch Humus umfassen. Unter natürlichem Erdreich wird insbesondere auch Pflanzerde zum Anbau von Pflanzen, insbesondere Grünpflanzen verstanden.

Weiterhin vorteilhaft ist das in den Pflanzfreiräumen aufgenommene Pflanzsubstrat zur Aufnahme von Niederschlagswasser von der Oberfläche des Flächenbelags und zum zumindest teilweisen Ableiten des aufgenommenen Niederschlagswassers in die Bettungsschicht ausgebildet ist, wobei mittels des natürlichen und/oder künstlichen Molekularsiebes Schadstoffe aus dem Niederschlagswassers ausgefiltert werden. Das erfindungsgemäße Pflanzsubstrat stellt damit einen fruchtbaren Nährboden für Pflanzen mit ausreichend Speicherkapazität für Niederschlagswasser bereit, welches zugleich von Schadstoffen gereinigt wird.

In einer bevorzugten Ausführungsvariante der Erfindung beträgt der Volumenanteil des natürlichen und/oder künstlichen Molekularsiebes bezogen auf das Gesamtvolumen des Pflanzsubstrates zwischen 3% und 30%, insbesondere zwischen 5% und 20%. Vorteilhaft kann entweder natürliches Molekularsieb oder künstliches Molekularsieb mit dem natürlichen Erdreich vermischt werden. Alternativ kann auch eine vorteilhafte Mischung aus natürlichen und künstlichen Molekularsieb in den angegebenen Volumenanteilen dem natürlichen Erdreich beigefügt werden, wobei deren jeweiliger Volumenanteil abhängig von der gewünschten Filterleistung ist. Zur Herstellung des erfindungsgemäßen Pflanzsubstrates kann beispielsweise ein Zwangsmischer Verwendung finden.

Besonders bevorzugt ist das natürliche Molekularsieb ein kornförmig gebrochenes, natürliches Material, das beispielsweise eine von der Kugelform abweichende Kornform aufweist. Weiterhin vorteilhaft weist das natürliche Molekularsieb eine Korngröße von 0,5mm bis 5,0mm, vorzugsweise 1,5 mm bis 3 mm und/oder besitzt eine Porengröße bzw. einen Porendurchmesser bzw. eine Porenweite von 0,3nm, 0,4nm oder 0,5nm und/oder eine Porosität von 20% bis 40%, vorzugsweise zwischen 25% und 30%. Dabei ist das natürliche Molekularsieb besonders bevorzugt ein natürlicher Zeolith, der zur Entfernung von Schadstoffen, insbesondere Schwermetallen aus dem Niederschlagswasser geeignet ist. Vorteilhaft konnte durch die Beimischung eines natürlichen Molekularsiebes, insbesondere eines natürlichen Zeoliths auch die Speicherkapazität des Pflanzsubstrats für das aufgenommene Niederschlagswasser erhöht werden.

Unter einem natürlichem Zeolith im erfindungsgemäßen Sinne wird ein Alumosilikat-Mineral natürlichen Ursprungs verstanden, welches zumindest Mineralanteile von Klinoptilolith, Mordenit, Phillipisit, Chabasit, Erionit und/oder Analcim aufweist. Besonders bevorzugt bestehen die verwendeten natürlichen Zeolithe im Wesentlichen aus Klinoptilolith mit geringen Anteilen an Cristobalit, Lehmglimmer und/oder Plagioklas.

In einer vorteilhaften Ausführungsvariante weist das künstliche Molekularsieb eine Korngröße von 1,5 mm bis 2,5 mm und/oder einen Porendurchmesser von 4 Å, 5 Å oder 10 Å auf, wobei das künstliches Molekularsieb besonders bevorzugt ein synthetischer Zeolith ist, der zur Entfernung von Schadstoffen, insbesondere Schwermetallen aus dem Niederschlagswasser ausgebildet ist. Künstliche Molekularsiebe weisen bei im Vergleich zu natürlichen Zeolithen reduzierter Korngröße eine höhere Absorptionsfähigkeit für Schadstoffe auf.

In einer bevorzugten Ausführungsvariante sind die Rasenpflasterstein in Form einer Rasenplatte, einer Rasenstegplatte, eines Rasengittersteins oder eines Rasenkammersteins ausgebildet. Diese weisen unterschiedlich ausgebildete Pflanzräume auf, welche beispielsweise in Form von kammerartigen Durchbrüchen oder oberseitigen und/oder unterseitigen Pflanzöffnungen bzw. Pflanzkammern gebildet sein können. Dabei erstrecken sich die Pflanzfreiräume vorzugsweise von Oberfläche des Flächenbelages zur Bettungsschicht, und zwar in vertikaler und/oder horizontaler Richtung durch den Rasenpflasterstein.

In einer Weiterbildung der Erfindung weist der begrünbare Flächenbelag Fugen aus, die sich durch die Verlegung der Rasenpflastersteine im Verbund ausbilden, die mit einem Fugenmaterial befüllt sind, welches vorzugsweise ebenfalls eine Filterschicht zur Entfernung von Schadstoffen aus dem Niederschlagswasser bildet oder umfasst. In einer Ausführungsvariante sind die Pflanzfreiräume zumindest teilweise, vorzugsweise im Wesentlichen vollständig mit dem Pflanzsubstrat befüllt. Eine teilweise Befüllung ermöglicht die Realisierung einer Filterschicht und die Verwendung einer kostengünstigeren Pflanzerde im verbleibenden Bereich der Pflanzfreiräume.

Die Erfindung betrifft auch ein Pflanzsubstrat zum Verfüllen von Pflanzfreiräumen eines begrünbarer Flächenbelages umfassend eine Vielzahl von im Verbund verlegten Rasenpflastersteine aus Beton, wobei die Rasenpflastersteine zur Aufnahme des Pflanzsubstrates jeweils mehrere Pflanzfreiräumen aufweisen. Besonders vorteilhaft besteht das Pflanzsubstrat aus einem Gemisch aus natürlichem Erdreich, insbesondere Humus und zumindest einem natürlichen und/oder künstlichen Molekularsieb besteht. Dabei kann der Volumenanteil des natürlichen und/oder künstlichen Molekularsiebes bezogen auf das Gesamtvolumen des Pflanzsubstrates zwischen 3% und 30%, insbesondere zwischen 5% und 20% betragen.

Auch hier findet vorteilhaft ein natürliche Molekularsieb Verwendung, welches ein kornförmig gebrochenes, natürliches Material ist und welches vorzugsweise eine von der Kugelform abweichende Kornform aufweist. Das natürliche Molekularsieb kann eine Korngröße von 0,5mm bis 5,0mm, vorzugsweise 1,5 mm bis 3 mm und eine Porengröße bzw. einen Porendurchmesser bzw. eine Porenweite von 0,3nm, 0,4nm oder 0,5nm und/oder eine Porosität von 20% bis 40%, vorzugsweise zwischen 25% und 30% aufweisen. Besonders bevorzugt ist das natürliche Molekularsieb ein natürlicher Zeolith, der zur Entfernung von Schadstoffen, insbesondere Schwermetallen aus dem Niederschlagswasser geeignet ist. Ein derartiges Pflanzsubstrat kann beispielsweise auch für Randeinfassungen von begrünten Flächenbelägen oder sonstigen Pflanzbeeten Verwendung finden.

Besonders bevorzugt ist das natürliche Zeolith ein Alumosilikat-Mineral natürlichen Ursprungs, welches zumindest Mineralanteile von Klinoptilolith, Mordenit, Phillipisit, Chabasit, Erionit und/oder Analcim aufweist. Das natürliche Zeolith kann im Wesentlichen aus Klinoptilolith mit geringen Anteilen an Cristobalit, Lehmglimmer und/oder Plagioklas bestehen.

Alternativ oder zusätzlich kann die Mischung ein künstliches Molekularsieb mit einer Korngröße von 1,5 mm bis 2,5 mm aufweisen, wobei der Porendurchmesser beispielsweise 4 Å, 5 Å oder 10 Å beträgt. Besondere Vorteile hat die Verwendung eines künstlichen bzw. synthetischen Zeoliths gezeigt, der zur Entfernung von Schadstoffen, insbesondere Schwermetallen aus dem Niederschlagswasser ausgebildet ist.

Zudem ergeben sich Weiterbildungen, Vorteile und Anwendungsmöglichkeiten der Erfindung auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen und/oder deren Rückbeziehung. Auch wird der Inhalt der Ansprüche zu einem Bestandteil der Beschreibung gemacht.

### Kurze Beschreibung der Zeichnungen

Die Erfindung soll nachfolgend anhand von Ausführungsbeispielen im Zusammenhang mit den Zeichnungen näher erläutert werden. Es zeigen
- Fig. 1: eine schematische Draufsicht auf einen begrünbaren Flächenbelag und
- Fig. 2: einen grob schematischen Schnitt durch begrünbaren Flächenbelag gemäß der Figur 1.

### Wege zur Ausführung der Erfindung

Für gleiche oder gleich wirkende Elemente der Erfindung werden in den Figuren identische Bezugszeichen verwendet. Ferner werden der Übersichtlichkeit halber nur Bezugszeichen in den einzelnen Figuren dargestellt, die für die Beschreibung der jeweiligen Figur erforderlich sind.

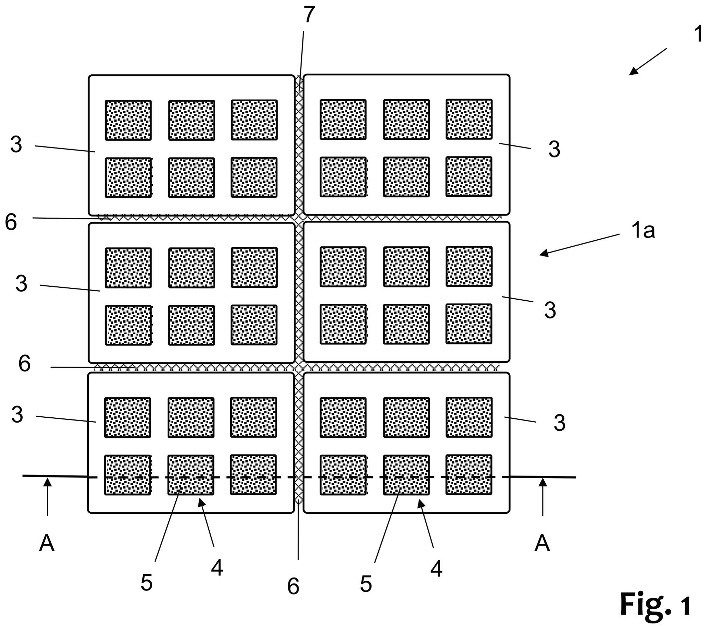

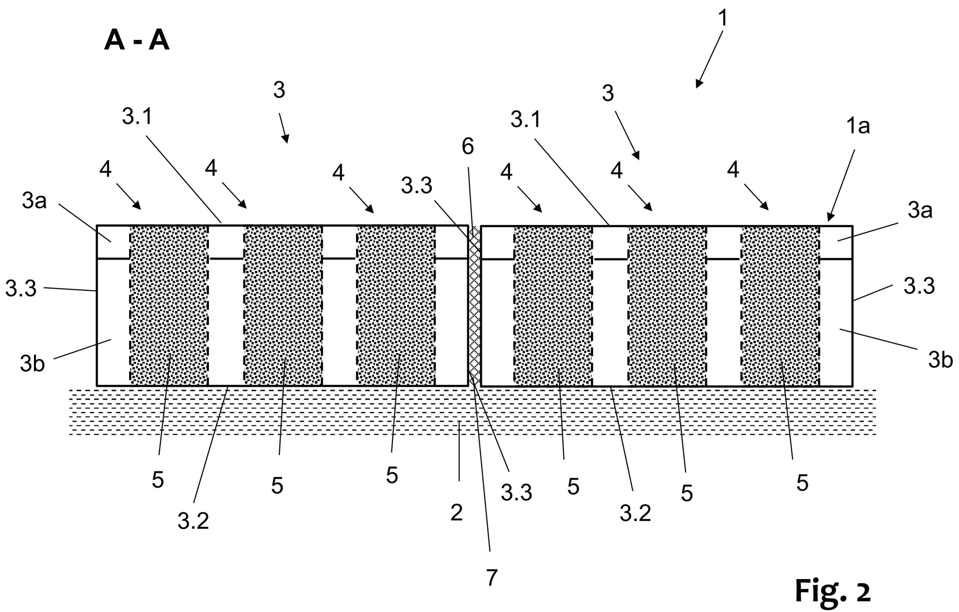

Figur 1 zeigt beispielhaft in einer stark vereinfachten schematischen Ansicht eine Draufsicht auf einen erfindungsgemäßen begrünbaren Flächenbelag 1 mit einer begeh- und/oder befahrbaren Oberfläche 1a umfassend eine Vielzahl von im Verbund auf einer Bettungsschicht 2 verlegten Rasenpflastersteinen 3 aus Beton, wobei die Rasenpflastersteine 3 mehrere zur Aufnahme eines Pflanzsubstrates 5 ausgebildete Pflanzfreiräume 4 aufweisen. In Figur 2 ist ein Schnitt durch den Flächenbelag 1 gemäß Figur 1 entlang der Linie A-A gezeigt, und zwar durch beispielsweise mehrere im Rasenpflasterstein 3 vorgesehene Pflanzfreiräume 4.

Vorliegenden werden unter einem Rasenpflastersteinen 3 aus Beton im Wesentlichen baugleiche Betonelemente verstanden, die zur Erstellung eines begrünbaren Flächenbelages 1 durch Pflastern verwendbar sind und mehrere Pflanzfreiräume 4 umfassen. Die Rasenpflastersteine 3 aus Beton können beispielsweise in Form von Rasengittersteinen, Rasenkammersteinen, Rasenplatten oder Rasenstegplatten ausgebildet sein. Die Rasenpflastersteine 3 werden im Verbund, vorzugsweise miteinander verzahnt, und oberflächenbündig zueinander verlegt, so dass ein begrünbarer Flächenbelag 1 mit einer im Wesentlichen ebenen Oberfläche 1a entsteht.

Im vorliegenden Ausführungsbeispiel umfasst der begrünbare Flächenbelag 1 beispielhaft sechs Rasenpflastersteine 3 aus Beton, die im Verbund auf der Bettungsschicht 2 verlegt sind, und zwar derart, dass die Seitenflächen zweier aneinander anschließender Rasenpflastersteine 3 jeweils eine Fuge 6 einschließen. Bei dem in Figur 1 gezeigten Flächenbelag sind aus den sechs Rasenpflastersteinen 3 beispielsweise drei Reihen mit jeweils zwei Rasenpflastersteinen 3 gebildet. Es versteht sich, dass beliebige Verlegevarianten von Rasenpflastersteinen 3 möglich sind ohne das dadurch der Erfindungsgedanke verlassen wird.

Ein Rasenpflasterstein 3 weist dabei beispielhaft mehrere Pflanzfreiräume 4 auf, und zwar im vorliegenden Ausführungsbeispiele jeweils sechs Pflanzfreiräume 4, die jeweils mit dem erfindungsgemäßen Pflanzsubstrat 5 gefüllt sind. Die Pflanzfreiräume 4 erstrecken sich von der Oberfläche 1a des Flächenbelages 1 durch den Rasenpflasterstein 3 in Richtung der Bettungsschicht 2 und werden vorzugsweise in Form von entsprechenden Durchbrüchen durch den Rasenpflasterstein 3 gebildet. Über die Pflanzfreiräume 4 kann Niederschlagswasser von der Oberfläche 1a des Flächenbelages 1 eindringen, dort im Pflanzsubstrat 5 gespeichert werden und das überschüssige Niederschlagswasser in die Bettungsschicht 2 abfliesen bzw. versickern. Die Pflanzfreiräume 4 können beispielsweise durch kammerartige Durchbrüche oder in Form sonstiger Pflanzöffnungen oder Pflanzkammern gebildet sein.

Die Rasenpflastersteine 3 sind vorzugsweise mehrschichtig ausgebildet und weisen zumindest eine die Oberfläche 1a bildende Vorsatzbetonschicht 3a und eine daran anschließende Kernbetonschicht 3b auf, wobei die Vorsatzbetonschicht 3a vorzugsweise aus einem gefügedichten Beton hergestellt und damit im Wesentlichen wasserundurchlässig ausgebildet ist. Die gefügedichte Vorsatzbetonschicht 3a ist aufgrund ihrer physikalischen Eigenschaften nicht zur Aufnahme und zum Transport von Niederschlagswasser eingerichtet, vielmehr verhindert diese ein Eindringen von Niederschlagswasser in den Beton des Rasenpflastersteins 3. Trifft nun Niederschlagswasser auf der Oberfläche 1a des Flächenbelages 1 auf, erfolgt die Aufnahme und damit auch die Versickerung des Niederschlagswassers nahezu ausschließlich über die Pflanzfreiräume 4 und ggf. die Fugen 6 in die Bettungsschicht 2. Die Fugen 6 des begründbaren Flächenbelages 1 sind vorzugsweise mit einem Fugenmaterial 7 befüllt, welches die erforderliche Fugenstabilität gewährleistet. Die Kernbetonschicht 3b kann entweder ebenfalls aus einem gefügedichten und damit wasserundurchlässigen Beton oder aus einem haufwerksporigen und damit wasserdurchlässigen Beton hergestellt sein.

Die Rasenpflastersteine 3 können auch so genannte Abstandshalter bzw. Abstandsnasen aufweisen (in den Figuren nicht dargestellt), die beim Verlegen der Rasenpflastersteine 3 im Verbund Fugen 6 in annähernd gleichmäßiger Breite gewährleisten und damit insbesondere für eine Mindestbreite der Fugen 6 sorgen.

Im vorliegenden Ausführungsbeispiel sind die Rasenpflastersteine 3 beispielsweise quaderförmig ausgebildet und weisen eine Oberseite 3.1 und eine Unterseite 3.2 auf, die eine durch die Pflanzfreiräume 4 unterbrochene ebene Oberfläche bildet. Ferner weisen Rasenpflastersteine 3 mehrere Umfangsseiten 3.3 auf. Die Oberfläche 1a des Flächenbelages 1 wird hierbei durch die Oberseiten 3.1 der im Verbund verlegten Rasenpflastersteine 3 gebildet, wobei die Pflastersteine 3 mit ihrer jeweiligen Unterseite 3.2 auf der Bettungsschicht 2 aufliegen.

Die Pflanzfreiräume 4 sind mit dem Pflanzsubstrat 5 befüllt und bilden einen Versickerungsweg zur Aufnahme und zum Ableiten von Niederschlagswasser von der Oberfläche 1a des Flächenbelags 1 in die Bettungsschicht 2 aus. Erfindungsgemäß besteht das Pflanzsubstrat 5 aus einem Gemisch aus natürlichem Erdreich, insbesondere Humus und zumindest einem natürlichen und/oder künstlichen Molekularsieb. Das Pflanzsubstrat 5 bildet dadurch eine Filterschicht zur Entfernung von Schadstoffen aus dem durch das Pflanzsubstrat 5 geleiteten Niederschlagswasser aus.

Dabei können die Pflanzfreiräume 4 der Rasenpflastersteine 3 entweder vollständig oder nur abschnittweise mit dem erfindungsgemäßen Pflanzsubtrat 5 befüllt sein. Beispielsweise kann das erfindungsgemäße Pflanzsubtrat zur Ausbildung einer Filterschicht in dem der Oberfläche 1a des Flächenbelages 1 zugewandten Abschnitt der Pflanzfreiräume 4 eingebracht sein, wohingegen der daran anschließende Abschnitt der Pflanzfreiräume 4 mit herkömmlichen Pflanzsubstrat bzw. natürlichen Erdreich ohne dem natürlichen und/oder künstlichen Molekularsieb verfüllt sein.

Das in den Pflanzfreiräumen 4 aufgenommene erfindungsgemäße Pflanzsubstrat 5 ist somit zur Aufnahme von Niederschlagswasser von der Oberfläche 1a des Flächenbelags 1 und zur Ausfilterung von Schadstoffen aus dem Niederschlagswassers mittels des natürlichen und/oder künstlichen Molekularsiebes ausgebildet. Darüber hinaus wird über das erfindungsgemäße Pflanzsubstrat 5 auch überschüssiges, d.h. nicht mehr speicherbares und entsprechend filtriertes Niederschlagswasser in die Bettungsschicht 2 abgeleitet.

Unter einem natürlichen Erdreich im erfindungsgemäßen Sinne werden alle feinkörnigen, natürlich vorkommenden Gemische verstanden, die einen fruchtbaren Erdboden für das Pflanzenwachstum bilden können. Dazu zählen insbesondere auch kompostierte Materialien, auch unter Einschluss von Zuschlägen wie beispielsweise Ziegelbruch, feuchtigkeitsspeichernder Steinbruch oder auch Basalt. Die Zuschläge weisen beispielsweise eine Körnung zwischen 2mm und 16mm auf. Natürliches Erdreich kann beispielsweise aus verwittertem Gestein, organischen Stoffen und/oder Mineralien bestehen bzw. daraus gewonnen werden. Besonders bevorzugt findet Humus als natürliches Erdreich Verwendung. Auch wird unter natürlicher Erde im erfindungsgemäßen Sinne Pflanzerde zum Anbau von Pflanzen, insbesondere Grünpflanzen verstanden.

Der Volumenanteil des natürlichen und/oder künstlichen Molekularsiebes bezogen auf das Gesamtvolumen des Pflanzsubstrates 5 beträgt vorzugsweise zwischen 3% und 30%, insbesondere zwischen 5% und 20%. Dabei bezieht der genannte Volumenanteil auf den Anteil an natürlichen Molekularsieb oder künstlichen Molekularsieb, sofern alternativ verwendet und im Falle einer Mischung aus natürlichen und künstlichen Molekularsiebes auf den Volumenanteil der Mischung.

Das erfindungsgemäße Pflanzsubstrat kann beispielsweise durch Mischen in einem Zwangsmischer, insbesondere Hochleistungs-Zwangsmischer hergestellt werden, und zwar vorzugsweise im trockenen Zustand. Über den zugesetzten Volumenanteil des natürlichen und/oder künstlichen Molekularsiebes kann die gewünschte Filterleistung des Pflanzsubstrates 5 individuell eingestellt und damit an die örtlichen Bedingungen angepasst werden.

Das natürliche Molekularsieb ist vorzugsweise ein kornförmig gebrochenes Material, das eine von der Kugelform abweichende Kornform aufweist. Unter einem natürlichen Molekularsieb im erfindungsgemäßen Sinne werden Naturzeolithe bzw. natürliche Zeolithe verstanden. Derartige natürliche Zeolithe sind Alumosilikat-Minerale natürlichen Ursprungs, insbesondere hydratisierte Alumosilikate von alkalischen Metallen und Metallischen alkalischer Erden, die aufgrund ihrer schwammähnlichen Struktur bzw. mikroporösen Beschaffenheit zur Aufnahme von Schadstoffen und zur Speicherung von Wasser geeignet sind. Derartige natürliche Zeolithe sind nicht nur zur Speicherung von Niederschlagswasser, sondern auch zur Entfernung von Schadstoffen, insbesondere Schwermetallen aus dem Niederschlagswasser gut geeignet.

Als natürliche Zeolithe können beispielsweise Mineralanteile von Klinoptilolith, Mordenit, Phillipisit, Chabasit, Erionit und/oder Analcim Verwendung finden. Beispielsweise sind natürliche Zeolithe wie Klinoptilolith und Chabazit zur Entfernung von Schwermetallen wie Pb, Cd, Cu, Zn, Cr, Ni, Co und Fe aus kontaminiertem Wasser geeignet.

In einer vorteilhaften Ausführungsvariante weist das natürliche Molekularsieb eine Porengröße bzw. einen Porendurchmesser bzw. eine Porenweite von 0,3nm, 0,4nm oder 0,5nm und/oder eine Porosität von 20% bis 40%, vorzugsweise zwischen 25% und 30% auf. Insbesondere bei einer Porenweite von 0,4nm und einer Porosität von 25% bis 30% kann eine besonders effektive Entfernung von Schadstoffen, insbesondere Schwermetallen aus dem Niederschlagswasser erreicht werden.

Ein künstliches Molekularsieb ist ein industriell hergestelltes synthetisches Produkt, das sich durch ein besonders hohes Adsorptionsvermögen für gelöste Stoffe mit bestimmten Molekülgrößen auszeichnet. Als künstliche Molekularsiebe werden beispielsweise künstliche bzw. synthetische Zeolithe verwendet, die zur Entfernung von Schadstoffen, insbesondere Schwermetallen aus dem Niederschlagswasser besonders gut geeignet ist. Ein derartiges künstliches Molekularsieb weist beispielsweise eine Korngröße von 1,5 mm bis 2,5 mm und einen Porendurchmesser von 4 Å, 5 Å oder 10 Å auf.

Die Erfindung wurde voranstehend an einem Ausführungsbeispiel beschrieben. Es versteht sich, dass zahlreiche Modifikationen und Änderungen der Erfindung im Rahmen der beigefügten Ansprüche möglich sind, ohne dass hierdurch der Erfindungsgedanke verlassen wird.

### Bezugszeichenliste

- 1: Flächenbelag
- 1a: Oberfläche
- 2: Bettungsschicht
- 3: Rasenpflastersteine
- 3a: Vorsatzbetonschicht
- 3b: Kernbetonschicht
- 3.1: Oberseite
- 3.2: Unterseite
- 3.3: Umfangsseiten
- 4: Pflanzfreiräume
- 5: Pflanzsubstrat
- 6: Fugen
- 7: Fugenmaterial

## Patentansprüche

1. Begrünbarer Flächenbelag (1) mit einer begeh- und/oder befahrbaren Oberfläche (1a) umfassend eine Vielzahl von im Verbund auf einer Bettungsschicht (2) verlegten Rasenpflastersteinen (3) aus Beton, wobei die Rasenpflastersteine (3) mehrere zur Aufnahme eines Pflanzsubstrates (5) ausgebildete Pflanzfreiräume (4) aufweisen, wobei die Pflanzfreiräume (4) mit dem Pflanzsubstrat (5) befüllt sind, **dadurch gekennzeichnet, dass** das Pflanzsubstrat (5) aus einem Gemisch aus natürlichem Erdreich, insbesondere Humus und zumindest einem natürlichen und/oder künstlichen Molekularsieb besteht.

2. Begrünbarer Flächenbelag (1) nach Anspruch 1, **dadurch gekennzeichnet, dass** das in den Pflanzfreiräume (4) aufgenommene Pflanzsubstrat (5) zur Aufnahme von Niederschlagswasser von der Oberfläche (1a) des Flächenbelags (1) und zum zumindest teilweisen Ableiten des aufgenommenen Niederschlagswassers in die Bettungsschicht (2) ausgebildet ist, wobei mittels des natürlichen und/oder künstlichen Molekularsiebes Schadstoffe aus dem Niederschlagswassers ausgefiltert werden.

3. Begrünbarer Flächenbelag (1) nach Anspruch 1 oder 2, **dadurch**
**gekennzeichnet, dass** der Volumenanteil des natürlichen und/oder künstlichen Molekularsiebes bezogen auf das Gesamtvolumen des Pflanzsubstrates zwischen 3% und 30%, insbesondere zwischen 5% und 20% beträgt.

4. Begrünbarer Flächenbelag (1) nach einem der vorhergehenden Ansprüche,
**dadurch gekennzeichnet, dass** das natürliche Molekularsieb ein kornförmig gebrochenes, natürliches Material ist, das vorzugsweise eine von der Kugelform abweichende Kornform aufweist.

5. Begrünbarer Flächenbelag (1) nach einem der vorhergehenden Ansprüche,
**dadurch gekennzeichnet, dass** das natürliche Molekularsieb eine Korngröße von 0,5mm bis 5,0mm, vorzugsweise 1,5 mm bis 3 mm aufweist und/oder dass das künstliche Molekularsieb eine Korngröße von 1,5 mm bis 2,5 mm aufweist.

6. Begrünbarer Flächenbelag (1) nach einem der vorhergehenden Ansprüche,
**dadurch gekennzeichnet, dass** das natürliche Molekularsieb eine Porengröße bzw. einen Porendurchmesser bzw. eine Porenweite von 0,3nm, 0,4nm oder 0,5nm und/oder eine Porosität von 20% bis 40%, vorzugsweise zwischen 25% und 30% aufweist.

7. Begrünbarer Flächenbelag (1) nach einem der vorhergehenden Ansprüche,
**dadurch gekennzeichnet, dass** das natürliche Molekularsieb ein natürlicher Zeolith ist, der zur Entfernung von Schadstoffen, insbesondere Schwermetallen aus dem Niederschlagswasser geeignet ist.

8. Begrünbarer Flächenbelag (1) nach Anspruch 7, **dadurch gekennzeichnet, dass** der natürliche Zeolith ein Alumosilikat-Mineral natürlichen Ursprungs ist, welches zumindest Mineralanteile von Klinoptilolith, Mordenit, Phillipisit, Chabasit, Erionit und/oder Analcim aufweist und/oder dass der natürliche Zeolith im Wesentlichen aus Klinoptilolith mit geringen Anteilen an Cristobalit, Lehmglimmer und/oder Plagioklas besteht.

9. Begrünbarer Flächenbelag (1) nach Anspruch 5, **dadurch gekennzeichnet, dass** das künstliche Molekularsieb einen Porendurchmesser von 4 Å, 5 Å oder 10 Å aufweist und/oder dass das künstliches Molekularsieb ein synthetischer Zeolith ist, der zur Entfernung von Schadstoffen, insbesondere Schwermetallen aus dem Niederschlagswasser ausgebildet ist.

10. Begrünbarer Flächenbelag (1) nach einem der vorhergehenden Ansprüche,
**dadurch gekennzeichnet, dass** der Rasenpflasterstein (39 in Form einer Rasenplatte, insbesondere einer Rasenstegplatte, eines Rasengittersteins oder eines Rasenkammersteins ausgebildet ist und/oder dass benachbarte, im Verbund verlegte Rasenpflastersteine (3) Fugen (6) ausbilden, die vorzugsweise mit einem eine Filterschicht zur Entfernung von Schadstoffen aus dem Niederschlagswasser bildenden Fugenmaterial befüllt sind.

11. Begrünbarer Flächenbelag (1) nach einem der vorhergehenden Ansprüche,
**dadurch gekennzeichnet, dass** die Pflanzfreiräume (4) durch kammerartige Durchbrüche oder längliche Durchbrüche im Rasenpflasterstein (3) gebildet sind, die sich von Oberfläche (1a) des Flächenbelages (1) zur Bettungsschicht (2) erstrecken und/oder dass Pflanzfreiräume (4) zumindest teilweise, vorzugsweise im Wesentlichen vollständig mit dem Pflanzsubstrat (5) befüllt sind.

12. Pflanzsubstrat (5) zum Verfüllen von Pflanzfreiräumen (4) eines begrünbarer Flächenbelages (1) umfassend eine Vielzahl von im Verbund verlegten Rasenpflastersteine (3) aus Beton, wobei die Rasenpflastersteine (3, 3' 3") zur Aufnahme des Pflanzsubstrates (5) jeweils mehrere Pflanzfreiräumen (4) aufweisen, **dadurch gekennzeichnet, dass** das Pflanzsubstrat (5) aus einem Gemisch aus natürlichem Erdreich, insbesondere Humus und zumindest einem natürlichen und/oder künstlichen Molekularsieb besteht.

13. Pflanzsubstrat nach Anspruch 12, **dadurch gekennzeichnet, dass** der Volumenanteil des natürlichen und/oder künstlichen Molekularsiebes bezogen auf das Gesamtvolumen des Pflanzsubstrates zwischen 3% und 30%, insbesondere zwischen 5% und 20% beträgt und/oder dass das natürliche Molekularsieb ein kornförmig gebrochenes, natürliches Material ist, das vorzugsweise eine von der Kugelform abweichende Kornform aufweist.

14. Pflanzsubstrat nach einem Anspruch 12 oder 13, **dadurch gekennzeichnet, dass** das natürliche Molekularsieb eine Korngröße von 0,5mm bis 5,0mm, vorzugsweise 1,5 mm bis 3 mm aufweist und/oder dass das natürliche Molekularsieb eine Porengröße bzw. einen Porendurchmesser bzw. eine Porenweite von 0,3nm, 0,4nm oder 0,5nm und/oder eine Porosität von 20% bis 40%, vorzugsweise zwischen 25% und 30% aufweist.

15. Pflanzsubstrat nach einem der Ansprüche 12 bis 14, **dadurch gekennzeichnet, dass** das natürliche Molekularsieb ein natürlicher Zeolith ist, der zur Entfernung von Schadstoffen, insbesondere Schwermetallen aus dem Niederschlagswasser geeignet ist.

16. Pflanzsubstrat nach einem der Ansprüche 12 bis 15, **dadurch gekennzeichnet, dass** der natürliche Zeolith ein Alumosilikat-Mineral natürlichen Ursprungs ist, welches zumindest Mineralanteile von Klinoptilolith, Mordenit, Phillipisit, Chabasit, Erionit und/oder Analcim aufweist oder dass der natürliche Zeolith im Wesentlichen aus Klinoptilolith mit geringen Anteilen an Cristobalit, Lehmglimmer und/oder Plagioklas besteht.

17. Pflanzsubstrat nach einem der Ansprüche 12 bis 16, **dadurch gekennzeichnet, dass** das künstliche Molekularsieb eine Korngröße von 1,5 mm bis 2,5 mm aufweist und/oder dass das künstliche Molekularsieb einen Porendurchmesser von 4 Å, 5 Å oder 10 Å aufweist und/oder dass das künstliches Molekularsieb ein synthetischer Zeolith ist, der zur Entfernung von Schadstoffen, insbesondere Schwermetallen aus dem Niederschlagswasser ausgebildet ist.
